# EUROPEAN PATENT APPLICATION

(11) **EP 2 105 059 A1**
(43) Date of publication of application: **30.09.2009**
(21) Application number: 08102918.3
(22) Date of filing: 26.03.2008
(51) Int. Cl.: A45B 11/00, A47G 25/12

(54) **Accessory attachment device**

(71) Applicant: Mamas & Papas (Holdings) Limited, HD5 0RH Yorkshire Huddersfield (GB)
(72) Inventor: Plested, Nigel Jason, London, Greater London N14 7BT (GB); Shaw, Richard Lee, Manchester, Greater Manchester M24 5PR (GB)
(74) Representative: Molony, Anna

(57) **Abstract**

An accessory attachment device (10) comprising a first clamp collar part (12), a second clamp collar part (14), a secondary locking mechanism (16), and an accessory engaging arm (18). The clamp collar parts (12,14) together define a clamp collar, adapted for location around an elongate structure onto which an accessory is to be attached. Engagement seats (24,26) are provided on the clamp collar parts (12,14). The engagement seat (26) on the second clamp collar part (14) is provided on a saddle member (28), mounted on a piston (30), which projects outwardly from the second clamp collar part (14). The saddle member (28), and thus the engagement seat (26), is rectilinearly movable away from/towards the clamp collar part (14). The secondary locking mechanism (16) mates around approximately one half of each of the clamp collar parts (12,14), across the join between them, when they are in the closed condition. The accessory engaging arm (18) is rotatably mounted on a clip (16).

## Description

The invention relates to an accessory attachment device.

Accessories such as parasols are typically attached to part of a larger structure, such as a pushchair, playpen, or high chair, using a mechanical vice type fixing comprising a fixed jaw and a substantially parallel movable jaw. The jaws typically include generally curved portions, forming recesses for locating either side of a section of a tubular structure, such as a playpen or pushchair frame. The movable jaw is mounted on a threaded screw which, when rotated, causes the movable jaw to move towards or away from the fixed jaw. The vice can thus be located around the structure and tightened to fix it onto the structure, to thereby mount, for example, a parasol on a pushchair frame.

A problem faced by known mechanical vice type fixings is that the mechanical coupling between the structure and the vice is often weak enough for the vice to accidentally release, resulting in the accessory falling off. This is a particular problem for pushchair parasols which are often caused to fall off as a result of the pushchair vibrating as it is pushed along an uneven surface or due to prevailing weather conditions.

According to a first aspect of the invention there is provided an accessory attachment device comprising:
a first clamp collar part;
a second clamp collar part;
the first and second clamp collar parts being movable relative to one another between an open condition in which the clamp collar parts are spaced from one another such that a section of an elongate structural member to which an accessory is to be attached may be located therebetween, and a closed condition in which the clamp collar parts are located generally adjacent one another and together define a clamp collar which at least substantially encloses and engages with the section of the elongate structural member;
locking means adapted to engage the first and second clamp collar parts and retain them in the closed condition; and
an accessory engaging interface adapted to mount an accessory onto the accessory attachment device.

In the closed condition, the first and second clamp collar parts are secured together to form a closed clamp collar which at least substantially encloses the section of the elongate structural member received within them. The resulting clamp collar engages a much larger part of the surface area of than the prior art mechanical vice type fixings. A stronger mechanical coupling is therefore provided between the accessory attachment device of the invention than can be achieved with known mechanical vice type fixings. In addition, because the clamp collar at least substantially encloses the section of the structural member around which it is located, exposure to mechanical vibrations or prevailing weather conditions is extremely unlikely to result in the accessory attachment device accidentally releasing from the elongate structural member.

The first and second clamp collar parts are preferably of a size and shape such that the clamp collar fully encloses the section of the elongate structural member.

The first and second clamp collar parts may have a generally curved cross-sectional shape and substantially straight elongate edges. Preferably, the first and second clamp collar parts are generally half circular or half elliptical in cross-section. The first and second clamp collar parts may alternatively be generally square U-shaped in cross-section and have substantially straight elongate edges, such that the resulting clamp collar is generally rectangular or square in cross-section.

The clamp collar therefore fully encloses a structural member located between the clamp collar parts. The cross-sectional shapes of the clamp collar parts complement the cross-sectional shape of the elongate structural member around which they are adapted to be located, thereby maximising the area of contact between the clamp collar parts and the surface of the elongate structural member.

Preferably, one elongate edge of each of the first and second clamp collar parts is profiled, the profiles of the elongate edges being of complementary shapes such that the said elongate edges mate with one another when the clamp collar parts are in the closed condition.

The first and second clamp collar parts are preferably movably coupled to each other. The first and second clamp collar parts are preferably hingedly coupled to each other. This maximises the achievable spacing between the clamp collar parts in the open condition whilst ensuring that the clamp collar parts cannot be fully separated and lost.

Each clamp collar part is preferably provided with an engagement seat adapted to engage part of an elongate structural member. An engagement seat may form part of the internal surface of a clamp collar part. The engagement seats maximise the coupling between the clamp collar parts and the surface of the elongate structural member. The engagement seats are preferably made of a compression material, such as thermoplastic rubber. The engagement seats thereby form a gripping surface adapted to engage with the surface of the elongate structural member.

Preferably, the engagement seat on one of the first and second clamp collar parts is movably mounted thereon for rectilinear movement between a stowed position generally adjacent the internal surface of the respective clamp collar part and a deployed position spaced from the internal surface of the respective clamp collar part, such that the internal cross-sectional size of the clamp collar may be varied. The internal dimensions of the clamp collar can thereby be varied to complement one or more of the external dimensions of the elongate structural member.

The said engagement seat is preferably provided on a saddle member movably mounted for rectilinear movement. The saddle member is preferably mounted on one end of a piston member operable to cause rectilinear movement of the saddle member between the stowed and deployed positions. The piston member is preferably mounted on mechanical actuation means operable to cause rectilinear movement of the saddle member. The accessory attachment device can therefore be used on structural members of differing cross-sectional profile, since the cross-sectional dimensions of the clamp collar can be varied to accommodate the different profiles by moving the saddle member to various deployed positions.

The locking means preferably comprises mechanical fastening means having a first fastener part provided on one of the first and second clamp collar parts for engagement with a second fastener part provided on the other of the other one of the first and second clamp collar parts. The mechanical fastening means is preferably a snap-fit or friction fit mechanical fastening means. The clamp collar parts can thereby be securely fastened together in the closed condition, but easily released when it is required to move them to the open condition.

The locking means may alternatively or additionally comprise a locking member adapted to locate across at least one pair of adjacently located elongate edges of the clamp collar parts in their closed condition and to mechanically couple to part of the clamp collar parts. The locking member thereby provides a second level of locking between the clamp collar parts, such that they cannot be moved to the open condition unless the locking member is first released by a user. The clamp collar parts, in their closed condition, and the locking member thereby together fully enclose the elongate structural member to which the accessory attachment device is attached. It is therefore extremely difficult for the accessory attachment device to be accidentally released or removed.

The locking member preferably comprises a mechanical locking means, such as a clip, hook, bolt, catch or slide. The locking member most preferably comprises a locking clip having a complementary shape to part of the external surfaces of the first and second clamp collar parts.

The locking member is preferably provided with a first mechanical fastener towards one end for locking engagement with a second mechanical fastener correspondingly located on the external surface of a respective one of the first and second clamp collar parts. The locking member may be provided with first mechanical fasteners towards each end for locking engagement with second mechanical fasteners correspondingly located on the external surfaces of the first and second clamp collar parts. Alternatively, the locking member may be movably coupled at its other end to the other of the first and second clamp collar parts, the locking member being movable between a locked condition in engagement with the clamp collar parts and a released condition spaced from the clamp collar parts. The first and second mechanical fasteners preferably comprise snap-fit or friction fit mechanical fasteners.

Each of the mechanical fastening means and the mechanical fasteners of the locking member may therefore be released manually by a user, applying a level of force easily achievable by a typical adult, but the combined, two level locking provides a level of locking force which cannot generally be overcome due to exposure to mechanical vibration or prevailing weather conditions. The risk of the accessory attachment device accidentally releasing is thereby mitigated.

The accessory engaging interface may be provided on one of the first and second clamp collar parts or may be provided on the external surface of the locking member. The accessory engaging interface preferably comprises a selectively rotatably mounted accessory engaging arm. The accessory engaging interface preferably further comprising arm locking means operable to lock the accessory engaging arm in a desired position.

A wide variety of accessories can thereby be easily and interchangeably mounted on the accessory attachment device, for attachment to part of a structural member.

The accessory may comprise a parasol or a toy.

Embodiments of the invention will now be described, by way of example only, with reference to the accompanying drawings, in which:
Figure 1 is a diagrammatic representation of an accessory attachment device according to a first embodiment of the invention, shown with part of an accessory mounted thereon;
Figure 2 is a diagrammatic representation of the accessory attachment device of Figure 1, with the locking member shown in a released condition;
Figure 3 is a diagrammatic representation of the accessory attachment device of Figure 1, with the locking member in a released condition, the first and second clamp collar parts in the open condition, and the engagement seat and saddle member in a deployed position; and
Figure 4 is a diagrammatic cross-sectional representation of the accessory attachment device of Figure 1, with the locking member in a released condition, the first and second clamp collar parts in the open condition, and the engagement seat and saddle member in a stowed position.

Referring to the drawings, a first embodiment of the invention provides an accessory attachment device 10 comprising a first clamp collar part 12, a second clamp collar part 14, a locking member in the form of a secondary locking mechanism 16, and an accessory engaging arm 18.

In this example, the first and second clamp collar parts 12, 14 are each generally half-elliptical in cross-section, with straight elongate edges 12a, 12b, 14a,14b, and are open at each end..

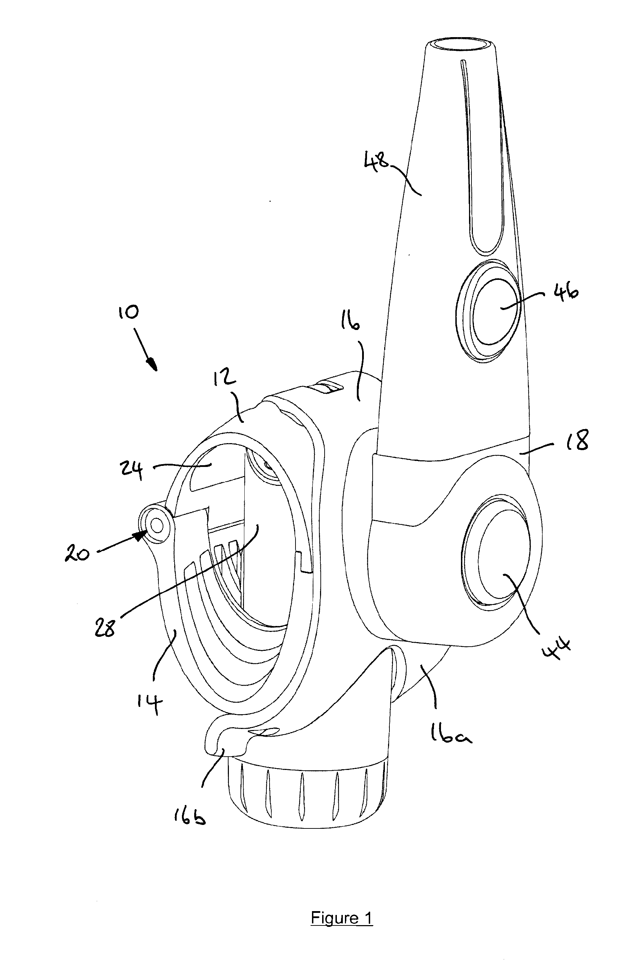

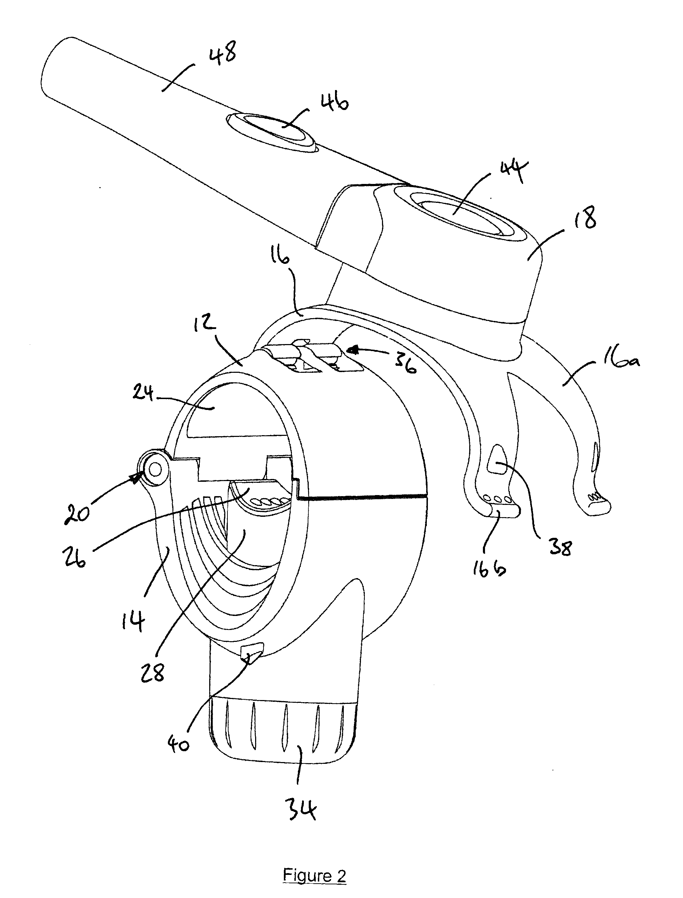

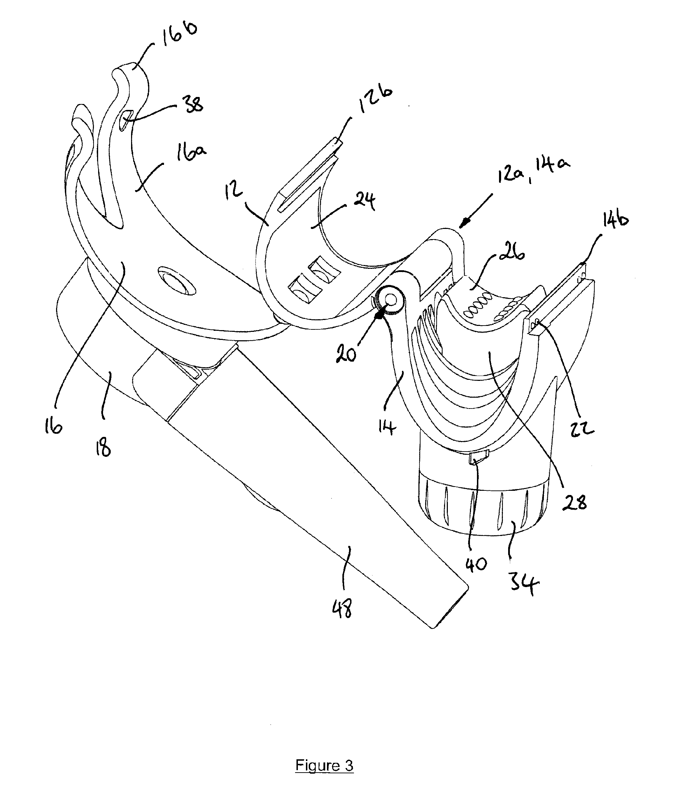

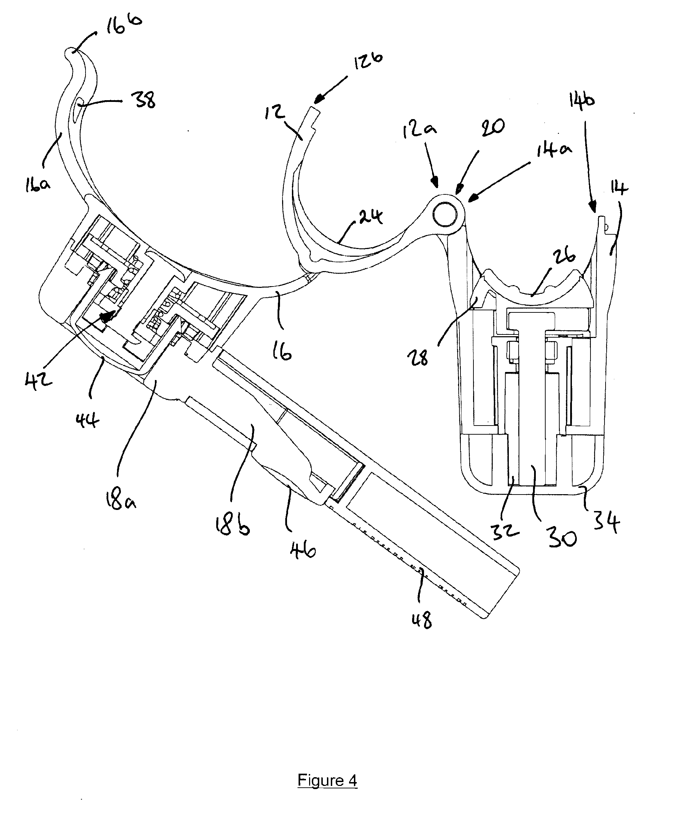

The first and second clamp collar parts 12, 14 are hingedly connected to each other along one of their straight edges 12a, 14a, via hinge 20. The first and second clamp collar parts 12, 14 are thus movable between an open condition (as shown in Figures 3 and 4) in which the clamp collar parts 12, 14 are spaced from one another, and a closed condition (as shown in Figures 1 and 2) in which the clamp collar parts 12, 14 are located together, and their other straight elongate edges 12b, 14b engage together. The other edges 12b, 14b of the first and second clamp collar parts 12, 14 are complimentarily profiled, so that the edges mate together when in the closed condition. Mechanical fastening means in the form of two pairs of raised interface pimples 22 and two pairs of complementary recesses (not visible in the drawings) are correspondingly located on the profiled edges 12b, 14b respectively, by which the first and second clamp collar parts 12, 14 can be releasably secured together in the closed condition.

Engagement seats 24, 26 are provided on each of the first and second clamp collar parts 12, 14. The engagement seats 24, 26 comprise pieces of compliant material in the form of thermoplastic rubber, having profiled surfaces to maximise the grip provided by the engagement seats 24, 26. As seen best in Figures 3 and 4, the engagement seat 24 on the first clamp collar part 12 is provided across the majority of its internal surface area.

The engagement seat 26 on the second clamp collar part 14 is provided on a saddle member 28, mounted on a piston 30. The saddle member 28, and thus the engagement seat 26, has substantially the same curved sectional profile as the second clamp collar part 14. The saddle member 28 is located within the second clamp collar part 14, and projects outwardly from its internal surface.

The piston 30 comprises a threaded rod. The saddle member 28 is coupled to one end of the piston rod 30. Mechanical actuation means in the form of a correspondingly threaded barrel 32 and operating dial 34 are coupled to the other end of the piston rod 30. The saddle member 28, and thus the engagement seat 26, is rectilinearly movable between a stowed position (shown in Figure 4) and deployed positions (shown in Figures 1 to 3) by turning the dial 34, to cause the piston 30 to move in/out of the barrel 32.

The secondary locking mechanism 16 in this example comprises a locking clip having a generally curved profile, and has a complementary shape to part of the external surfaces of the first and second clamp collar parts 12, 14, such that it is adapted to mate around approximately one half of each of the first and second clamp collar parts 12, 14, across the join between their elongate edges 12b, 14b, when they are in the closed condition, as shown in Figure 1.

The secondary locking mechanism 16 is hingedly connected to the apex of the first clamp collar part 12 via a second hinge pin. The secondary locking mechanism 16 is movable between a locked condition in engagement with the clamp collar parts 12, 14 (as shown in Figure 1) and a released condition spaced from the clamp collar parts 12, 14 (as shown in Figures 2 to 4).

The secondary locking mechanism 16 is provided with two locking arms 16a, having locking holes 38 provided therein, for locking engagement with fastener protrusions 40 correspondingly provided on the external surface of the second clamp collar part 14. The locking arms 16a are flexible to allow disengagement of the holes 38 from the protrusions 40, and have curved end sections 16b, by which a user may manually apply force to flex the locking arms 16a.

The accessory engaging arm 18 is rotatably mounted on the secondary locking mechanism 16. As shown in Figure 4, a lock mechanism 42 is provided within the lower part 18a of the arm 18, by which the arm 18 may be rotated and locked in one of several preset orientations. The lock mechanism 42 is manually operated by a push button 44. The upper part 18b of the arm forms an attachment interface, by which an accessory 48 (not forming part of the invention) is mounted on the accessory engaging arm 18. A second push button 46 is provided on the attachment interface 18b part of the arm 18, for engagement with a corresponding aperture in the accessory 48.

In use, to attach an accessory 48, such as a parasol, to an elongate structure, such as part of the frame of a pushchair, playpen or highchair, the accessory 48 is mounted on the attachment interface 18b, the secondary locking mechanism 16 is moved to its released condition, and the first and second clamp collar parts 12, 14 are moved to their open condition, as shown in Figure 4. The clamp collar parts 12, 14 are then located around a section of the elongate structure, and moved to their closed condition, such that the section of the elongate structure is fully enclosed within the clamp collar. If the elongate structure is of a smaller cross-sectional size than the clamp collar, the saddle 28 is moved to a deployed position, by turning the dial 34, as described above, to give the clamp collar a complementary internal cross-sectional size, so that the two engagement seats 24, 26 engage with and hold the elongate structure. It will be appreciated that the saddle 28 may alternatively or additionally be moved to a deployed position before the clamp collar parts 12, 14 are located around the elongate structure.

Once a secure grip is achieved between the engagement seats 24, 26 and the elongate structure, the secondary locking mechanism 16 may be moved to its locked condition, as shown in Figure 1. This also brings the accessory into its operating position. With the clamp collar parts 12, 14 in their closed condition and the secondary locking mechanism 16 in its locked condition, the clamp collar parts 12, 14 and the secondary locking mechanism 16 together fully enclose the elongate structure, forming a closed, bound connection between the accessory attachment device 10 and the elongate structure. It is therefore extremely difficult for the accessory attachment device 10 to be accidentally released from the elongate structure.

It will be appreciated that the accessory 48 may alternatively by mounted on the attachment interface 18b once the secondary locking mechanism 16 has been moved to its locked condition.

Various modifications may be made to the described embodiment without departing from the scope of the invention. The clamp collar parts may have a different cross-sectional profile than described, and in particular may have generally square U-shaped profiles, to form a generally rectangular or square shaped clamp collar. The engagement seats and the saddle may also correspondingly have a different cross-sectional profile. The clamp collar parts may each enclose a different proportion of an elongate structure than is described, or they may be shaped such that a section of an elongate structure is at least substantially, i.e. less than fully, enclosed; if the elongate structure is at least substantially enclosed, rather than fully enclosed, the functionality of the clamp collar parts and the resulting clamp collar is the same, in that a large engagement area is formed between the accessory attachment device and the elongate structure to which it is attached and a very secure enclosure is formed by the clamp collar around the elongate structure.

The saddle may be moveably mounted on a different arrangement to that shown. The secondary locking mechanism may have a different shape and/or configuration to that described, and may engage more or less of the clamp collar parts than described, or may be removed entirely. The secondary locking mechanism may alternatively comprise a locking hook, bolt, catch or slide adapted to mechanically couple to the clamp collar parts across the join between their elongate edges. The accessory engaging arm may be provided on one of the clamp collar parts, particularly when there is no secondary locking mechanism. Different mechanical fasteners and mechanical fastening means may be used to those described.

The accessory attachment device may be used to attach a wide range of accessories, including parasols and toys.

## Claims

1. An accessory attachment device (10) comprising:
a first clamp collar part (12);
a second clamp collar part (14);
the first and second clamp collar parts being movable relative to one another between an open condition in which the clamp collar parts are spaced from one another such that a section of an elongate structural member to which an accessory is to be attached may be located therebetween, and a closed condition in which the clamp collar parts are located generally adjacent one another and together define a clamp collar which at least substantially encloses and engages with the section of the elongate structural member;
locking means (16, 22, 38, 40) adapted to engage the first and second clamp collar parts and retain them in the closed condition; and
an accessory engaging interface (18) adapted to mount an accessory onto the accessory attachment device.

2. An accessory attachment device as claimed in claim 1, wherein the first and second clamp collar parts are of a size and shape such that the clamp collar fully encloses the section of the elongate structural member.

3. An accessory attachment device as claimed in claims 1 or 2, wherein the first and second clamp collar parts have a generally curved or square U-shaped cross-sectional shape and substantially straight elongate edges (12a, 12b, 14a, 14b).

4. An accessory attachment device as claimed in claims 1 or 2, wherein one elongate edge (12b, 14b) of each of the first and second clamp collar parts is profiled, the profiles of the elongate edges being of complementary shapes such that the said elongate edges mate with one another when the clamp collar parts are in the closed condition.

5. An accessory attachment device as claimed in any preceding claim, wherein the first and second clamp collar parts are movably coupled (20) to each other.

6. An accessory attachment device as claimed in any preceding claim, wherein each clamp collar part is provided with an engagement seat (24, 26) adapted to engage part of an elongate structural member.

7. An accessory attachment device as claimed in claim 6, wherein the engagement seat (26) on one of the first and second clamp collar parts is movably mounted thereon for rectilinear movement between a stowed position generally adjacent the internal surface of the respective clamp collar part and a deployed position spaced from the internal surface of the respective clamp collar part, such that the internal cross-sectional size of the clamp collar may be varied.

8. An accessory attachment device as claimed in claim 7, wherein the said engagement seat is provided on a saddle member (28) movably mounted (30, 32, 34) for rectilinear movement.

9. An accessory attachment device as claimed in any preceding claim, wherein the locking means comprises mechanical fastening means having a first fastener part (22) provided on one of the first and second clamp collar parts for engagement with a second fastener part provided on the other of the other one of the first and second clamp collar parts.

10. An accessory attachment device as claimed in any of claims 3 to 10, wherein the locking means comprises a locking member (16) adapted to locate across at least one pair of adjacently located elongate edges (12b, 14b) of the clamp collar parts in their closed condition and to mechanically couple to part of the clamp collar parts.

11. An accessory attachment device as claimed in claim 10, wherein the locking member comprises a mechanical locking means, such as a clip, hook, bolt, catch or slide.

12. An accessory attachment device as claimed in claim 11, wherein the locking member comprises a secondary locking mechanism having a complementary shape to part of the external surfaces of the first and second clamp collar parts.

13. An accessory attachment device as claimed in any of claims 10 to 12, wherein the locking member is provided with a first mechanical fastener (38) towards one end for locking engagement with a second mechanical fastener (40) correspondingly located on the external surface of a respective one of the first and second clamp collar parts.

14. An accessory attachment device as claimed in claim 13, wherein the locking member is provided with first mechanical fasteners (38) towards each end for locking engagement with second mechanical fasteners (40) correspondingly located on the external surfaces of the first and second clamp collar parts.

15. An accessory attachment device as claimed in claim 13, wherein the locking member is movably coupled (36) at its other end to the other of the first and second clamp collar parts, the locking member being movable between a locked condition in engagement with the clamp collar parts and a released condition spaced from the clamp collar parts.

16. An accessory attachment device as claimed in any preceding claim, wherein the accessory engaging interface (18) is provided on one of the first and second clamp collar parts or on the external surface of the locking member.
